# EUROPEAN PATENT APPLICATION

(11) **EP 4 726 463 A1**
(43) Date of publication of application: **15.04.2026**
(21) Application number: 24315460.6
(22) Date of filing: 08.10.2024
(51) Int. Cl.: G02F 1/01

(54) **RECONFIGURABLE PHOTONIC DEVICE**

(71) Applicant: Université Grenoble Alpes, 38400 Saint-Martin-d'Hères (FR); Université Savoie Mont Blanc, 73000 Chambéry (FR); Centre National de la Recherche Scientifique, 75016 Paris (FR); Commissariat à l'Energie Atomique et aux Energies Alternatives, 75015 Paris (FR); Institut Polytechnique de Grenoble, 38000 Grenoble (FR); Université Claude Bernard Lyon 1, 69100 Villeurbanne (FR); Ecole Centrale de Lyon, 69130 Ecully (FR); Ecole Superieure de Chimie, Physique, Electronique de Lyon, 69616 Villeurbanne Cedex (FR); Institut National des Sciences Appliquees de Lyon (Insa Lyon), 69100 Villeurbanne (FR)
(72) Inventor: Pavanello, Fabio, 38016 GRENOBLE Cedex 1 (FR); Charbonnier, Benoît, 38054 GRENOBLE Cedex 09 (FR); Orobtchouk, Régis, 38490 LES ABRETS EN DAUPHINE (FR); Hassan, Karim, 38054 GRENOBLE Cedex 09 (FR)
(74) Representative: Hautier IP

(57) **Abstract**

The invention relates to a photonic device (1) comprising a waveguide (10) in which light is dedicated to propagate along a main optical propagation direction (A), said waveguide comprising a central portion (10c) extending along the propagation direction. The device further comprises a phase change material (PCM) patch (20) disposed on the waveguide, wherein the PCM patch is dedicated to be heated. The device further comprises at least one heat sink (100) configured to drain heat from the PCM patch when heated, said heat sink being distinct from the central portion of the waveguide and having a thermal conductivity greater than or equal to that of the waveguide.

Another aspect of the invention relates to a photonic system comprising said photonic device.

## Description

### TECHNICAL FIELD

The present invention relates to the field of photonics. More specifically, the present invention relates to reconfigurable photonic devices for applications such as optical routing in communication networks, sensing (e.g., LIDAR), photonic memories in storage systems, matrix elements in matrix multiplication architectures, or synaptic weights in photonic neural networks.

### PRIOR ART

Reconfigurability in photonic devices is very useful for a wide spectrum of applications ranging from sensing and computing to communications and displays, to name a few. Reconfigurability can be achieved using phase-change materials (PCMs). PCMs are a peculiar class of materials that showcase a large difference in electrical and optical properties depending on their phase, whether crystalline or amorphous. These materials can be integrated within a dielectric stack and have already been used in a variety of applications ranging from rewriteable CDs to neuromorphic computing, imaging systems, and switches/routers. These materials can be integrated as thin films on top of optical waveguides and can be used to locally change the complex (real and imaginary) effective index of the optical modes propagating along these waveguides according to their phase. Such modifications lead to a change in absorption and phase for the optical modes within the waveguide where the PCM patch has been integrated.

In a previous work by Miscuglio et al. (DOI: 10.23919/ACES49320.2020.9196183), a multi-level discrete-state nonvolatile photonic memory based on a PCM is presented, to serve as node in a photonic neural network. When the network is trained offline using emulators, the extracted weights are set by selectively 'writing' portions of the PCM deposited on the waveguides, by heat induced laser irradiation, or local electrothermal heating, which promotes crystallization, and so modifies the waveguide modal refractive index in a reversible process.

To achieve the switching between the PCM stable phases, it is necessary to increase the PCM temperature above a certain threshold, e.g. if starting from a crystalline state it is necessary to achieve a temperature above the melting temperature Tₘₑₗₜ of the PCM. If instead the first phase is amorphous, it is then necessary to go beyond the glass temperature T_{glass} of the PCM to achieve a transition to a crystalline state. The PCM is then heated to the required threshold temperature and kept constant during the transition from crystalline to amorphous to consider the latent heat of fusion at Tₘₑₗₜ or during the transition from amorphous to crystalline to allow full crystallization above T_{glass}. However, in the case of the crystalline to amorphous transition, if the heat produced in the PCM is preserved long enough, the PCM can re-crystallize, compromising thus the non-volatility of the switching.

A purpose of the present invention is to enhance the reconfigurability of a PCM-based photonic device, by achieving a non-volatile switching of the PCM-phase. Another purpose of the present invention, is to guarantee a good optical performance of the photonic device.

### SUMMARY

To at least one of these ends, it is provided a photonic device comprising:
- a waveguide in which light is dedicated to propagate along a main optical propagation direction, said waveguide comprising a central portion extending along the propagation direction,
- a phase change material patch, hereafter PCM patch, on the waveguide, wherein the PCM patch is dedicated to be heated,
- at least one heat sink configured to drain heat from the PCM patch when heated, said heat sink being distinct from the central portion of the waveguide and having a thermal conductivity greater than or equal to that of the waveguide.

The heat sinks in the photonic device allow a faster evacuation of the heat produced in the PCM patch. As a result, when the PCM is heated up to a required threshold temperature, the PCM patch can be rapidly cooled by the heat sinks. A rapid cooling speed allows to modify in a non-volatile manner the properties of the PCM patch. A PCM patch initially in its crystalline state, for example, can transition to a molten phase as a consequence of a stimulus by reaching its melting temperature. If the cooling speed is fast enough, the PCM patch will not have time to return to the crystalline phase and therefore will remain amorphous. However, if the cooling speed is not fast enough, then the PCM patch will transition back to its crystalline state. In the latter case, the PCM patch will not have changed its electrical and optical properties and therefore no reconfigurability will be achieved. In the presently described device, a cooling speed above or near 1 K/ns, for a crystalline-to-amorphous transition, can be achieved for a large class of PCM, while allowing a good optical confinement for the optical mode of the light propagating in the waveguide. Such fast cooling requires a tradeoff between the cooling speed and the energy necessary to trigger the phase transition in the PCM patch. This device allows to obtain a compromise between fast cooling and efficient heating of the PCM patch, guarantying a non-volatile switching of PCM phases, while limiting the energy consumption. This largely improves the reconfigurability of the device.

Another aspect of the invention relates to a photonic system comprising at least one photonic device. The photonic device of the present invention can be integrated in more complex photonic systems such as a Mach-Zehnder interferometer (MZI), to achieve a modulation of the optical amplitude of the light based on a phase shift-induced unbalance in one of the two arms of the MZI. The device can be implemented in other systems such as microring resonators, photonic crystals or grating couplers.

### BRIEF DESCRIPTION OF THE FIGURES

The foregoing and other aspects of the embodiments of this invention are made more evident in the following Detailed Description, when read in conjunction with the attached Drawing Figures, wherein:
Figure 1 illustrates a cross-section of a PCM-based photonic device comprising heat sinks with vias and a strip-like waveguide, according to an embodiment.
Figure 2 illustrates a cross-section of a PCM-based photonic device comprising heat sinks with peripheral portions of a rib-like waveguide, according to an embodiment.
Figure 3 illustrates a cross-section of a PCM-based photonic device comprising heat sinks with vias and peripheral portions of a rib-like waveguide, according to an embodiment.
Figure 4 illustrates a cross-section of a PCM-based photonic device comprising heat sinks with a doped portion underneath the vias, according to an embodiment.
Figure 5A, Figure 5B, figures 5A and 5B illustrate a cross-section of a PCM-based photonic device comprising a p-n/p-i-n junction, respectively, according to different embodiments.
Figure 6 illustrates a cross-section of a PCM-based photonic device in which the PCM patch extends laterally over adjacent waveguide regions, according to an embodiment.
Figure 7 illustrates a cross-section of a PCM-based photonic device with a slot-waveguide.
Figure 8A, Figure 8B, figures 8A and 8B illustrate a system in an interferometric configuration integrating a photonic device, according to different embodiments.
Figure 9 illustrates a simulated map of the electrical field propagating in the waveguide of the photonic device.
Figure 10 illustrates a thermal simulation in a PCM-based photonic device according to different examples.

The figures are given as example and are not restrictive to the invention. They are guideline schematic representations designed to facilitate the understanding of the invention and they are not necessarily at the scale of practical implementations.

### DETAILED DESCRIPTION

According to an embodiment, the at least one heat sink comprises at least one via extending vertically across the device, wherein a lower extremity of said via is disposed in proximity to the PCM patch and an upper extremity of said via is disposed in proximity to a surface of the photonic device.

The introduction of vias in the photonic device, allows a fast evacuation of the heat. The vias are designed to be in close proximity to the PCM patch so they can absorb the heat from the PCM patch and from the surrounding cladding, and lead the heat away towards the backend of the device. The fabrication methods for such designs are advantageously CMOS-compatible and the resulting device can be used for a large spectrum of applications related to reconfigurable photonics.

According to an example, the at least one heat sink comprises a peripheral portion forming a continuous extension of the central portion of the waveguide along a direction crossing the propagation direction.

The peripheral portion of the waveguide acts as a heat sink that drains the heat from the PCM patch through the central portion of the waveguide then through the peripheral portion of the waveguide away from the PCM patch.

According to an example, the at least one heat sink comprises the at least one via and the peripheral portion said peripheral portion being in contact with the at least one via.

According to an example, the peripheral portion comprises a first sub-portion disposed under the at least one via and in contact with the at least one via, and a second sub-portion disposed between the central portion and the first sub-portion, wherein the thickness of the second sub-portion is smaller than the thicknesses of the central portion and the first sub-portion.

The combination of the peripheral portion of the waveguide and the vias form a heat sink which is even more efficient in evacuating the heat. The shape of this waveguide called a "rib waveguide" allows a strong confinement of the optical field in the central portion, while allowing the evacuation of the heat through the peripheral portion of the waveguide. In fact, the reduced thickness of the second sub-portion, relatively to the central portion is behind the good optical confinement. On the other hand, the full thickness of the first sub-portion allows a good heat evacuation.

According to an example, the at least one heat sink further comprises at least one metallic level extending in a plane transversal to the extension of the at least one via.

According to an example, the first sub-portion is doped. The region of the peripheral portion that is underneath the vias can be advantageously doped, which increases the thermal conduction between the waveguide and the vias due to the higher concentration of carriers in this region. This does not affect the optical field, as the doped region is relatively far from the central portion that confines the optical field.

According to an example, the waveguide comprises a slot extending along the propagation direction. Due to the presence of a slot in the waveguide, the center of the central portion presents a lower permittivity than the surrounding. The slot waveguide allows to achieve a strong confinement of the optical mode in between the higher permittivity material of the central portion. This architecture also allows to efficiently evacuate heat from the sides in the higher permittivity material.

According to an example, the device comprises a first and a second heat sinks disposed on opposite sides of the central portion, each sink comprising a peripheral portion, wherein:
- a first region of the waveguide disposed on the same side of the first heat sink and in contact with the first heat sink, is doped with a first doping type, and
- a second region of the waveguide disposed on the same side of the second heat sink and in contact with the second heat sink, is doped with a second doping type different from the first doping type.

According to an example, the first region and the second region of the waveguide are directly in contact, forming a p-n junction in the central portion of the waveguide.

According to an example, the first region and the second region are separated by a non-doped region of the waveguide, forming a p-i-n junction in the central portion of the waveguide.

The doping of the waveguide material allows a high-speed modulation in the device by carrier depletion or carrier injection through an electro-optic effect. Modulators based solely on p-n or p-i-n junctions can achieve speeds well-above tens of GHz. This mechanism can allow to achieve compact devices where a coarse reconfigurability is provided by the PCM patch (in a non-volatile manner), while a finer tunability is provided by the p-n or the p-i-n junctions.

According to an example, a doping concentration of the first region is higher in a portion in contact with the at least one via than in the remaining part of the first region, and a doping concentration of the second region is higher in a portion in contact with the at least one via than in the remaining part of the second region. As previously described, the higher concentration of carriers in the part of the peripheral portion that is connected to the vias, increases the heat conductivity between the waveguide and the vias.

According to an example, the PCM patch is in direct contact with the waveguide. The PCM patch being in direct contact with the waveguide, the heat can be transferred more easily to the waveguide to be evacuated by the heat sinks. According to an example, the PCM patch is in direct contact with adjacent high-permittivity regions, typically adjacent waveguide regions, that are part of the heat sinks.

According to an example, a layer based on a dielectric material separates the PCM patch from the waveguide. The separation between the PCM patch and the top of the waveguide can be non-null, for example by inserting a thin dielectric layer between them due to process constraints or others. While this slightly modifies the heat transfer between the PCM patch and the waveguide, an efficient cooling of the PCM patch can still be achieved.

According to an example, the device further comprises a heater disposed above the PCM patch, said heater being configured to heat the PCM patch when the heater is activated. The heater allows heating the PCM patch, and therefore switching its phase electrically, by applying electrical stimuli, e.g. by sending short electrical pulses.

According to an example, the PCM is heated by optical means, using a laser beam that is redirected to the PCM patch. The phase switching can thus be carried out by sending short laser pulses.

According to an example, the device further comprises a cladding layer based on a dielectric material, preferably based on silicon dioxide or silicon nitride, in which the waveguide is embedded. The material of the cladding layer plays a role in the heat management of the device. In fact, phase transitions are effectively carried out by locally heating the PCM patch. The control of the local heating depends on the type of material of the surrounding cladding. Silicon dioxide and silicon nitride are good thermal insulators, allowing a better localized heating, while providing good optical confinement and low loss signal propagation.

According to an example, the cladding layer is based on silicon oxide. Silicon oxide is generally used in reconfigurable devices based on PCMs. The use of a silicon oxide based cladding layer in a reconfigurable photonic device based on p-n or p-i-n junctions has never been reported to this date. In fact, p-n or p-i-n junctions require the integration of vias in the device which is not a trivial task.

We mean by "PCM patch" a shape based of a phase change material (PCM) which is obtained from a PCM layer that is etched or deposited in a pre-shaped geometry and it is generally thin (compared to the optical waveguide thickness) to induce a perturbation of the optical mode in the optical waveguide. Preferably, the waveguide has a high thermal conductivity. The waveguide can be made of any material. The waveguide is for example in silicon.

To achieve reconfigurability with a fine grain, only a portion of the PCM can be made transitioning from crystalline to amorphous when heating.

A p-n junction is a boundary or interface between p-type and n-type semiconductor materials. A p-type region contains a higher concentration of holes (positive charge carriers) due to the presence of acceptor impurities. An n-type region contains a higher concentration of electrons (negative charge carriers) due to the presence of donor impurities.

A p-i-n junction is a junction that includes an intrinsic (undoped) portion of the semiconductor material, sandwiched between the p-type and n-type regions. The "i" stands for intrinsic, meaning the layer is pure semiconductor material without any significant doping.

The terms "substantially", "approximately", "about" mean, when referring to a value, "within 10%" of that value.

The following detailed description of the invention refers to the accompanying drawings. While the description includes exemplary embodiments, other embodiments are possible, and changes may be made to the embodiments described without departing from the spirit and scope of the invention.

Some advantageous features will be described below. Then some exemplary embodiments and use cases will be further detailed in regard to the drawings.

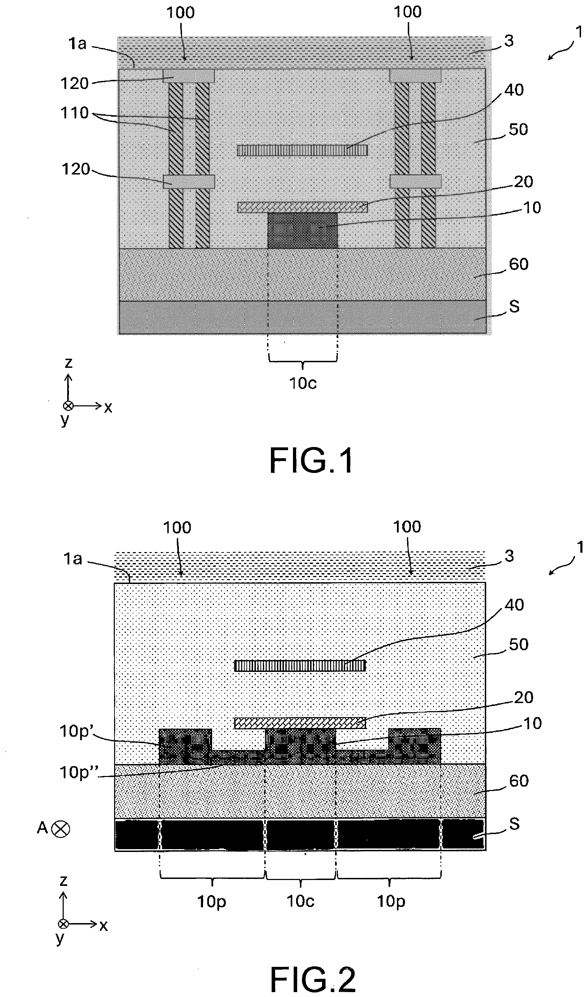

Figure 1 illustrates a reconfigurable photonic device 1 based on a phase change material (PCM) that can be used as an optical modulator. The photonic device 1 comprises a substrate S extending in an xy plane defined by an x direction and a y direction perpendicular to the x direction. The photonic device 1 further comprises a layer 60 on top of the substrate S and extending in a plane parallel to the xy plane. The layer 60 can be for example a buried oxide (known as 'BOX'), based on silicon dioxide. A waveguide 10 is formed on top of the BOX layer 60. The waveguide 10 is configured to allow the propagation of light along a propagation direction A. The waveguide 10 comprises a central portion 10c that extends along the propagation direction A and that is configured to confine the optical modes of the light propagating in the waveguide 10.

The bottom surface of the waveguide 10 is preferably in direct contact with the BOX layer 60. The waveguide 10 is preferably embedded in a cladding layer 50, meaning that the surface of the waveguide 10 that is not in contact with the layer 60 or with any other element of the photonic device 1, is covered by the cladding layer 50. The cladding layer 50 is based on a dielectric material such as silicon dioxide (SiO₂) or silicon nitride (SiN). The material of the waveguide 10 is chosen to have a higher permittivity than those of the BOX layer and the cladding layer 50. A higher permittivity of the waveguide material, and consequently a higher refractive index of the waveguide 10 allows the confinement of the light within the waveguide 10. The waveguide 10 can be for example based on silicon.

The photonic device 1 further comprises a PCM patch 20 above the waveguide 10. The PCM patch 20 can be in the form of a thin layer made of a PCM. These materials have distinct refractive indices in different phases (amorphous and crystalline) which can be used to dynamically tune the waveguide's effective refractive index, allowing for optical switching and modulation. The PCM patch 20 can be made, for example, of germanium telluride (GeTe), germanium monoselenide (GeSe) that presents low optical losses in the telecommunications range, Ge-Sb-Se-Te (GSST) used for artificial synapses applications, Sb₂Se₃ that is transparent for telecommunications wavelengths around 1.5 µm, or other PCMs. The PCM patch presents a width along the x direction that can be comprised between 0.2 µm and 10 µm, hereafter taken equal to 1 µm.

In order to switch between the stable phases of the PCM, the PCM patch is heated. The control of the phase changes requires a controlled heating and cooling processes. The heating can be a resistive heating, using electrical pulsing. By applying short high-energy electrical pulses, Joule heating occurs increasing the temperature of the PCM patch. The photonic device can thus comprise a heater 40 embedded in proximity to the PCM patch 20, for example disposed above the PCM patch 20. Other methods can be used, such as focused laser beams on the PCM patch 20 that allow localized heating by sending short optical laser pulses.

To control the cooling of the PCM patch 20, notably in the transition from the crystalline to the amorphous phase, the photonic device 1 comprises one or several heat sinks 100. The heat sinks 100 are distinct from the central portion 10c of the waveguide 10 and present a thermal conductivity greater than or equal to that of the waveguide 10. This allows the heat sinks 100 to drain the heat produced inside and around the PCM patch 20 and to rapidly evacuate it far from the PCM patch and from the central portion 10c of the waveguide 10. Due to this rapid evacuation of heat, the PCM patch 20 can rapidly cool after the de-activation of the heater 40, which ensures a non-volatile switching from the crystalline to the amorphous phase.

As illustrated in figure 1, according to an embodiment, the heat sink 100 can comprise one or more vias 110 extending across the cladding layer 50 of the device, along a z direction perpendicular to the x and y directions. The lower extremity of the vias 110 can be disposed close to the PCM patch 20 and the upper extremity of the vias 110 can be disposed close to the surface 1a of the photonic device 1. This disposition of the vias 110 allows the evacuation of the heat from the PCM patch to the backend of the device, preferably to the surrounding of the device such as the air 3 for example. The heat sink 100 can further comprise lower and upper metallic levels 120 extending along the y direction for example, these metallic levels 120 being crossed by the vias 110. The metallic levels 120 contribute in evacuating the heat channeled by the vias 110.

As illustrated in figure 2, according to another embodiment, the heat sink 100 can comprise a peripheral portion 10p extending from the central portion 10c of the waveguide 10. In this embodiment, the waveguide can comprise one or two peripheral portions 10p made preferably from the same material as the central portion 10p, and extending in opposite directions relatively to the propagation direction A. These peripheral portions form a continuous extension of the central portion 10c. The heat produced in the PCM patch 20, can thus be drained by the peripheral portions 10p and lead far from the PCM patch 20 and from the central portion 10c.

The geometry of the peripheral portions 10p is optimized to conserve the confinement of the optical modes in the core of the central portion 10c. The peripheral portion 10p comprises a first sub-portion 10p' that is disposed at the free extremity of the peripheral portion opposite to the other extremity that is in contact with the central portion 10c. The first sub-portion 10p' preferably present the same thickness as the central portion 10c. The peripheral portion 10p can comprise a second sub-portion 10p" disposed between the first sub-portion 10p' and the central portion 10c. The second portion 10p" preferably presents a reduced thickness relatively to the thicknesses of the central portion 10c and the first sub-portion 10p'. This reduced thickness allows preserving the confinement of the optical modes inside the central portion 10c, while allowing the draining of the heat away from the PCM patch, through the second sub-portion 10p" leading it to the first sub-portion 10p' that is situated at a far enough distance from the central portion 10c. The length of the peripheral portion along the x direction can be comprised between 1 µm and 10 µm. The thickness of the central portion 10c and of the first sub-portion 10p', can be for example around 300 nm. The thickness of the second sub-portion 10p" can be for example 65 nm. The second sub-portions 10p" can be formed for instance by etching 235 nm-deep slots in the initial waveguide 10 layer.

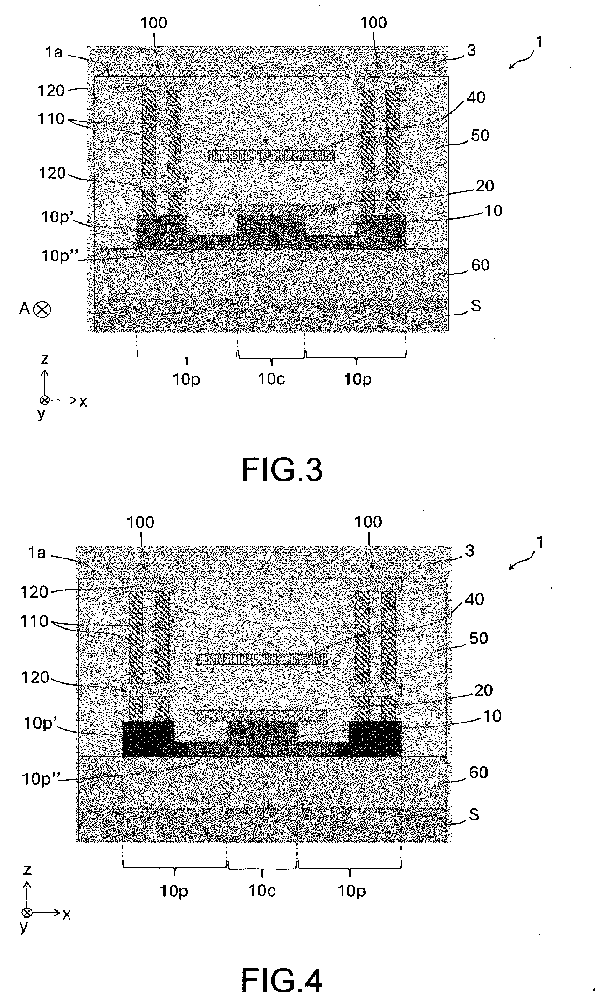

As illustrated in figure 3, according to another embodiment, the heat sink 100 can comprise both the vias 110 and the peripheral portion 10p. According to this embodiment, the first sub-portion 10p' is in contact with the vias 110, which allows the channeling of the heat from the PCM patch 20 through the peripheral portion 10p, right to the vias 110 that evacuate the heat to the backend of the device. The full thickness of the first sub-portions 10p' allows a better transfer of the heat from the peripheral portions 10p to the vias 110. The heat can also be evacuated through the metallic levels 120.

As illustrated in figure 4, according to an embodiment, the transfer of the heat from the first sub-portion 10p' to the vias 110 can further be enhanced by doping the first sub-portions with carriers. A part of the second sub-portions 10p" can also be doped as illustrated in figure 4. The doping of the first sub-portions 10p' can be necessary during the fabrication process because of certain designs rules. Nonetheless, the doping of these sub-portions is advantageous and does not disturb the optical modes that are confined in the central portion 10c of the waveguide 10 which is relatively far from the doped sub-portions. The increase of carriers in the first sub-portions 10p' improves the heat conduction to the vias 110, which enhances the evacuation of the heat.

The heat sinks 100 that have been previously described permit reaching high cooling speeds of the PCM patch 20, that are required for phase-change transitions and volatile/non-volatile reconfigurable properties of the device. Depending on the PCM, a cooling speed, for a crystalline to an amorphous transition, above or near 1 K/ns can be achieved. Such a high cooling speed guarantees the non-re-crystallization of the PCM, and consequently a non-volatile switching from the crystalline to the amorphous phases. Moreover, the presence of the heat sinks 100 does not alter the optical properties of the photonic device 1. In fact, a good optical confinement for the optical mode of the waveguide 10 with a PCM patch 20 on top of it can be obtained, and low optical losses that are not directly associated with the PCM presence can still be achieved, as well as a large degree of high speed and low speed reconfigurability.

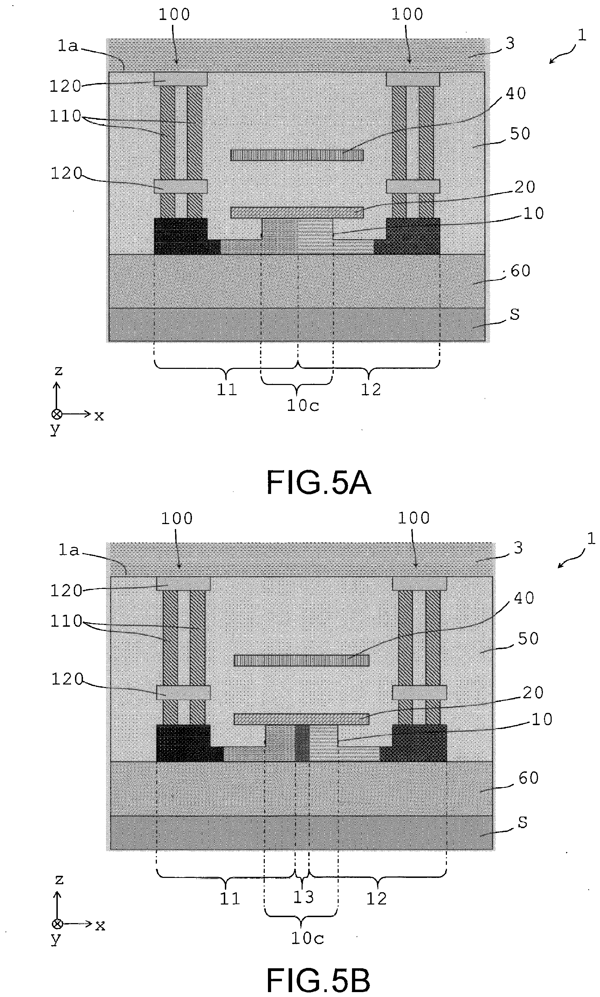

As illustrated in figures 5A and 5B, all of the waveguide 10 can be doped according to an embodiment. A first region 11 and a second region 12 of the waveguide 10 opposite to the first region 11, can be doped with different doping types. For instance, the first region 11 which is in contact with a first heat sink 100 disposed on one side from the central portion 10c, can be doped with a first doping type, p, or n. The second region 12 which is in contact with a second heat sink 100 disposed on the opposite side from the central portion 10c, can be doped with a second doping type, n, or p respectively. The doping concentration can vary within a region. For example, in each region 11, 12, the doping concentration can be higher in a part of the region 11, 12, that is underneath the vias 110, i.e. the first sub-portion 10p' and a small part of the second sub-portion 10p". As explained before, this higher concentration of carriers enhances the heat transfer between the waveguide 10 and the vias 110. It allows also an enhanced, potentially high-speed volatile reconfigurability.

As illustrated in figure 5A, according to a variant, the first and the second doped regions 11, 12, can be in direct contact, forming thus a p-n junction in or near the center of the central portion 10c.

As illustrated in figure 5B, according to another variant, the first and the second doped regions 11, 12, can be separated by a non-doped region 13 of the central portion 10c. This non-doped region 13 is an intrinsic region of the waveguide 10 that has not been exposed to dopants, also known as a `not intentionally doped' (nid) region. This forms a pi-n junction in or near the center of the central portion 10c. Keeping or forming such an intrinsic region in the center of the central portion 10c allows to limit or decrease the optical losses induced by free carriers absorption.

The introduction of a p-n or p-i-n junction in the waveguide 20 is another way to achieve dynamic control of the optical properties of the device. By applying a forward or reverse bias to the p-n or p-i-n junction, carriers can be injected into or depleted from the junction region. This changes the refractive index of the material due to the plasma dispersion effect. As a result, p-n and p-i-n junctions can be used to locally tune the refractive index in the waveguide 10, which allows high-speed modulation of the optical properties of the device, such as the amplitude and/or the phase of the optical signals propagating in the waveguide. The conjunction of the PCM patch 20 and the p-n or p-i-n junction in the central portion 10c of the same device, permits to achieve a coarse modulation using the PCM patch 20 in a non-volatile manner, and a finer modulation using the p-n or p-i-n junction in the central portion 10c that confines the optical waveguide modes. Modulators based solely on p-n or p-i-n junctions can achieve speeds well-above tens of GHz. The conjunction between a PCM and a p-n or p-i-n junction in a hybrid configuration, can be used for example in synaptic weights where an initial weight can be fixed with the PCM, and for reliability reasons, the weight can be slightly modified using the p-n or p-i-n junction to correct eventual errors and to enhance the precision of the fixed weight.

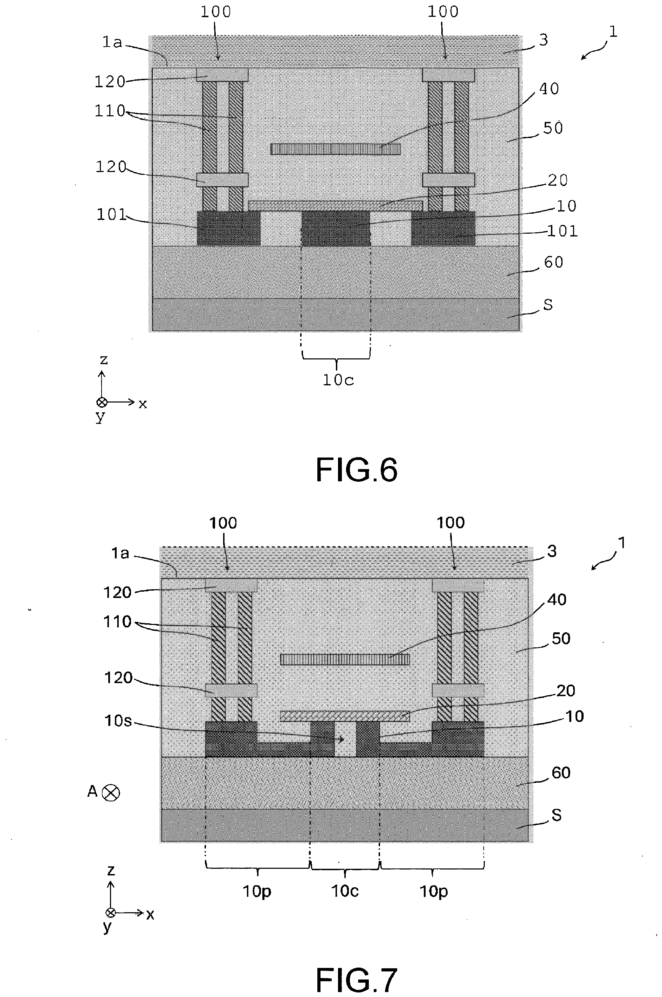

As illustrated in figures 1 to 5A, according to an embodiment, the PCM patch 20 can be in direct contact with the waveguide 10. This leads to a direct heat transfer from the PCM patch 20 to the heat sink 100. According to another embodiment, as illustrated in figure 6, the PCM patch 20 can be separated from the waveguide 10, for example by a layer 30 based on a dielectric material deposited on top of the central portion 10c of the waveguide 10. This dielectric layer 30 can be necessary due to process constraints or in certain device designs, and does not largely affect the heat transfer between the PCM patch 20 and the heat sink 100.

As illustrated in figure 6, according to an example, the width of the PCM patch 20 along the x direction, can be extended so that the PCM patch 20 partially covers the first sub-portions 101 of the heat sink 100. The PCM patch 20 is in direct contact with the central portion 10c of the waveguide 10 and the sub-portions 101. This allows to further enhance the heat evacuation. The sub-portions 101 may be separated from the central portion 10c, as illustrated in figure 6. This allows to improve optical confinement in the waveguide 10. The sub-portions 101 may alternatively be linked to the central portion 10c. This allows to further enhance the heat evacuation.

As illustrated in figure 7, according to an embodiment, the central portion 10c of the waveguide 10 can comprise a narrow slot 10s extending along the propagation direction A. The slot 10s may extend over the entire height of the central portion 10c, as shown in figure 7, or over only part of the height of the central portion 10c. The slot 10s can be formed by locally etching the initial waveguide layer, partially or down to the BOX layer 60. The slot 10s can be filled with the cladding material of the cladding layer 50 or other low-permittivity material. The remaining parts of the central portion 10c delimiting the slot 10s present a higher permittivity than that of the slot 10s. The presence of a slot 10s in the central portion 10c allows a strong confinement of the optical modes in the slot between the higher permittivity regions due to a high refractive index contrast. The presence of a narrow slot 10c in the central portion 10c allows the evacuation of the heat through the remaining parts of the central portion 10c, right to the heat sinks 100.

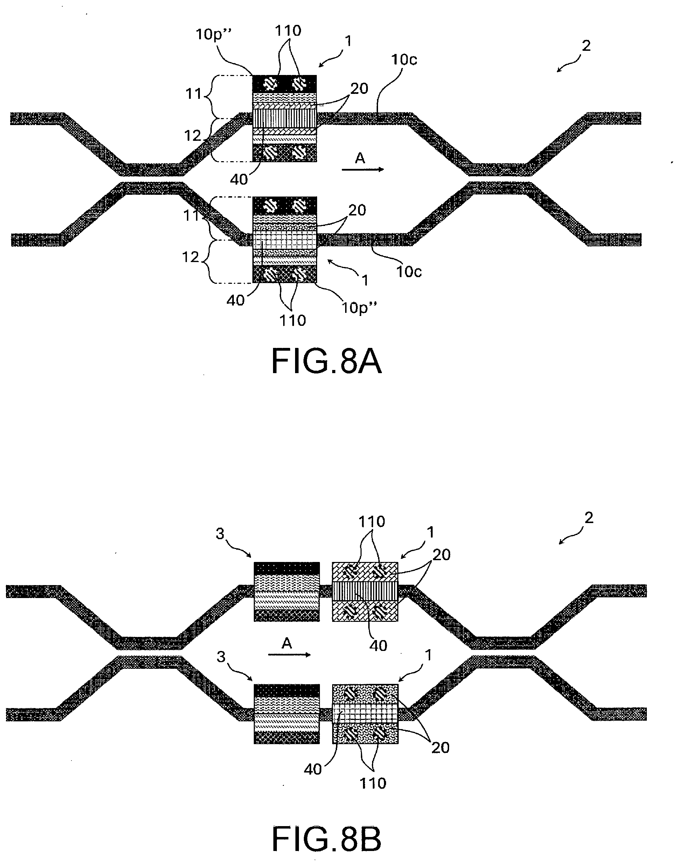

Figures 8A and 8B illustrate the integration of the described photonic device 1 or modulator in a more complex photonic system 2. The photonic system 2 can be for example, a Mach Zehnder interferometer (MZI), a basic building block in integrated photonics, to enable a modulation of the optical transmission by achieving a relative phase difference in the two arms of the interferometer. The photonic device 1 of the present invention, allows a modulation of the optical amplitude of the light propagating in the MZI, based on a phase shift-induced unbalance in one of the two arms of the MZI.

As illustrated in figure 8A, a modulator or a device 1 can be integrated in each arm of the MZI. The device 1 can comprise both a PCM patch to achieve non-volatile reconfigurability and a p-n or p-i-n junction to achieve a high-speed amplitude modulation (reconfigurability), in the order of tens of GHz in the MZI, while guaranteeing all the previous properties of optical confinement (with slightly increased optical losses due to the light doping) and rapid cooling speed. In the example illustrated in figure 8A, the heater 40 of the modulator 1 integrated in the bottom arm of the MZI 2 can be activated, leading to a switch to the amorphous phase of at least a portion of the PCM, while the heater 40 of the modulator 1 integrated in the top arm of the MZI is disactivated and the PCM remains in its crystalline phase. This leads to a modulation of the optical amplitude in the bottom arm. The presence of the heat sinks 100, i.e. the vias 110, at each side of the modulator 1, ensures the non-volatility of this configuration due to a rapid cooling of the PCM patch. A p-n or a p-i-n junction can also achieve a fast modulation of the optical amplitude in the MZI 2. According to an embodiment, the p-n or p-i-n junction can be directly integrated into the modulator 1 as previously described in figures 5A and 5B.

Figure 8B illustrates another embodiment, in which a high-speed modulator 3 is integrated separately from the photonic device 1 in the MZI 2, in each arm of the MZI for example. According to this embodiment, the photonic device 1 does not comprise any junction, and the reconfigurability is only achieved based on the PCM phase transitions. A coarse modulation of the optical path can thus be achieved using the photonic device 1 in each of the MZI arms. Concurrently, the high-speed modulator 3 can be used to finely tune the modulation in the MZI arms. The high-speed modulator 3 can be for example based on a p-n or p-i-n junction. According to another example, the high-speed modulator 3 can be for example an electro-optical modulator such as a Lithium Niobate modulator based on the Pockels effect.

To implement such a photonic system 2, a rib-like waveguide 10 with peripheral portions 10p is first defined, providing a fast cooling due to the heat sinks 100, in agreement with the foundry/process constraints for exact dimensions of the etching depth and width of the peripheral portions 10p. A length of the system 2 is then defined which provides the necessary performance, e.g. a π phase-shift evaluated by simulating the optical mode field properties for the chosen waveguide 10. The required driving conditions from an electronics interface point of view are then assessed. The approach proposed in this invention applies to other type of materials and PCM compounds requiring a fast cooling time to maintain an effective change of their properties, e.g. optical, electrical, etc. after phase transition.

The present invention does not limit its scope of applicability to the MZI configuration, but it can be applied to other photonic systems 2 such as photonic crystals, microring resonators, crossings, multi=mode interference (MMI) devices, arrayed waveguide gratings (AWGs), grating couplers, adiabatic couplers, directional couplers. In general, any photonic system 2 that integrates a PCM patch 20 and that requires reconfigurability can benefit from the present invention.

The following is a proof of concept obtained by simulations; it should not be construed as limitative of the claimed invention.

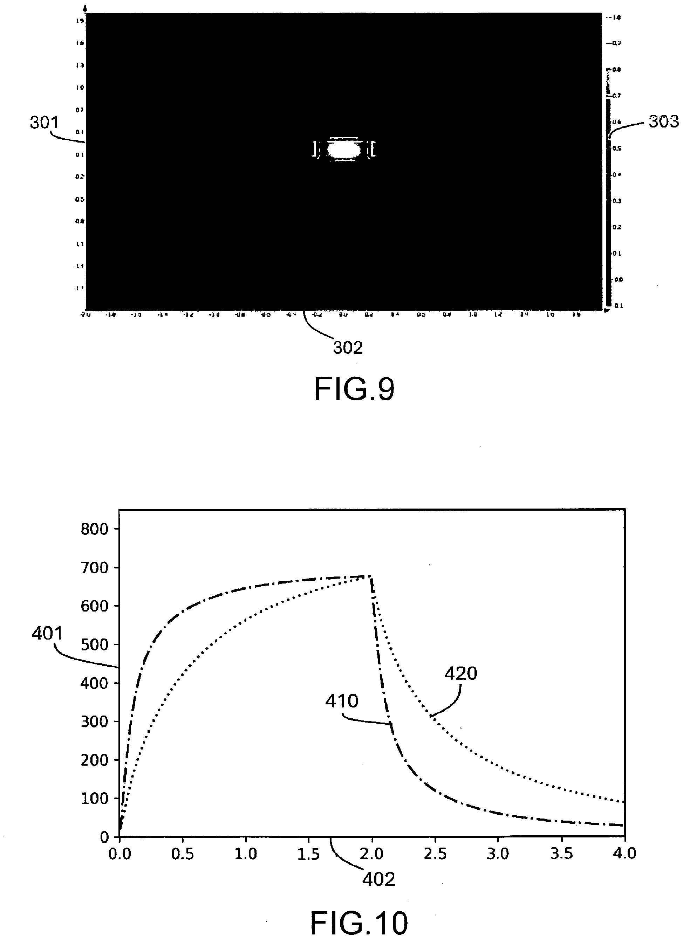

Figure 9 illustrates a simulation of the electric field amplitude of an optical field propagating in a photonic device 1 according to the embodiment illustrated in figure 3. The axes 301 and 302 of the electric field map in figure 9 represent the distance in micrometers (µm) from the center of the central portion 10c along the y and the x directions respectively. The color scale 303 represent the electric field amplitude of the optical field propagating in the central portion 10c. In this simulation, a rib waveguide 10 with a central portion 10c presenting a width along the x direction of 500 nm is chosen, with 235 nm deep etched slots in the peripheral portions 10p forming the second sub-portions 10p". The sub-portions 10p" present a width along the x direction of 500 nm as well. The PCM patch 20 is made from GeSe and presents a width along the x direction of 1 µm, while the waveguide 10 material is Silicon, the cladding layer 50 and buried oxide (BOX) 60 material is Silicon dioxide,

The mode simulation shows that the optical field is well-confined in the central portion 10c and does not interact with the sub-portions 10p" of the heat sinks 100, while at the same time allowing for heat evacuation from the thinner high-permittivity sub-portions 10p'' that are in contact with the vias 110.

To evaluate the efficiency of the heat sinks 100 in evacuating the heat, figure 10 shows simulation results of the temperature versus time at the PCM patch 20 level with a constant power input of 2 µs duration dissipated at the heater 40 level. The axes 401 and 402 of the graph in figure 10 represent the temperature in Celsius degrees (°C) and the time in microseconds (µs) respectively. The first curve 410 corresponds to a standard Silicon strip waveguide 10 geometry comprising solely a central portion 10c without the presence of a heat sink 100. In the first curve 410, an electrical power density of 4.85 mW/µm is used to activate the heater 40. The second curve 420 corresponds to a photonic device 1 with a Silicon rib waveguide 10 geometry, as illustrated in figure 3, comprising a central portion 10c connected to two heat sinks 100, each heat sink 100 comprising a peripheral portion 10p and vias 110, with the same configuration used for thermal simulations. In Table 1, the thermal parameters that have been used for the simulation are provided, where *ρ* is the material's density, *cₚ* is the material's specific heat capacity and *Kₜₕ* is the material's thermal conductivity. In the second curve 420, an electrical power density of 11.7 mW/µm is used to activate the heater 40. The heater's driver speed is not taken into account in the roll-off time for the PCM temperature. The comparison of the two curves 410, 420, shows clearly the efficiency of the heat sinks 100 in evacuating the heat produced at the PCM patch 20 level. A cooling speed of more than 1 K/ns can therefore be extracted from such a curve 420.

**Table 1: Material parameters used for the thermal simulations.**

| Material | *ρ* [kg/m3] | *cₚ* [J/kg·K] | *Kₜₕ* [W/m·K] |
|---|---|---|---|
| GeSe crystalline | 5520 | 329 | 2.06 |
| TiN | 5210 | 29 | 388 |
| Air | 1.17 | 1006 | 0.026 |
| Silicon | 2330 | 711 | 148 |
| Silicon dioxide | 2203 | 709 | 1.38 |

Of course, the different characteristics, forms, variants and embodiments of the invention can be combined together in various combinations.

All applications which need reconfigurable photonic devices could take advantage from this invention because it allows to set discrete values (optical performance) in a practical and simple manner allowing large system scalability and reliability.

The embodiments and aspects of the here detailed disclosure may be described and illustrated in conjunction with systems and devices which are meant to be exemplary and illustrative, not limiting in scope. Specific configurations and details may be set forth to provide an understanding of the disclosure. However, it should be apparent to one skilled in the art that the disclosure may be practiced without some of the specific details being presented herein. Furthermore, some well-known steps or components may be described only generally, or even omitted, for the sake of illustrative clarity.

For the purposes of promoting an understanding of the principles of various embodiments of the disclosure, reference has been made to preferred embodiments illustrated in the drawings, and specific language has been used to describe these embodiments. However, no limitation of the scope of the disclosure is intended by this specific language, and the disclosure should be construed to encompass all embodiments that would normally occur to one of ordinary skill in the art.

## Claims

1. A photonic device (1) comprising:
- a waveguide (10) in which light is dedicated to propagate along a main optical propagation direction (A), said waveguide comprising a central portion (10c) extending along the propagation direction (A), and
- a phase change material patch (20), hereafter PCM patch, on the waveguide (10), wherein the PCM patch (20) is dedicated to be heated,
**characterized in that** it further comprises:
- at least one heat sink (100) configured to drain heat from the PCM patch (20) when heated, said heat sink (100) being distinct from the central portion (10c) of the waveguide (10) and having a thermal conductivity greater than or equal to that of the waveguide (10).

2. The photonic device (1) according to claim 1, wherein the at least one heat sink (100) comprises at least one via (110) extending vertically across the device (1), wherein a lower extremity of said via (110) is disposed in proximity to the PCM patch (20) and an upper extremity of said via (110) is disposed in proximity to a surface (1a) of the photonic device (1).

3. The photonic device (1) according to claim 1, wherein the at least one heat sink (100) comprises a peripheral portion (10p) forming a continuous extension of the central portion (10c) of the waveguide (10) along a direction crossing the propagation direction (A).

4. The photonic device (1) according to claim 2 in combination with claim 3, wherein the at least one heat sink (100) comprises the at least one via (110) and the peripheral portion (10p) said peripheral portion (10p) being in contact with the at least one via (110).

5. The photonic device (1) according to claim 4, wherein the peripheral portion (10p) comprises a first sub-portion (10p') disposed under the at least one via and in contact with the at least one via (110), and a second sub-portion (10p") disposed between the central portion (10c) and the first sub-portion (10p'), wherein the thickness of the second sub-portion (10p") is smaller than the thicknesses of the central portion (10c) and the first sub-portion (10p').

6. The photonic device (1) according to claim 5, wherein the first sub-portion (10p') is doped.

7. The photonic device (1) according to any one of the preceding claims, wherein the waveguide (10) comprises a slot (10s) extending along the propagation direction (A).

8. The photonic device (1) according to any one of the preceding claims in combination with claim 4, comprising a first and a second heat sinks (100) disposed on opposite sides of the central portion (10p), each sink comprising a peripheral portion (10p), wherein:
- a first region (11) of the waveguide (10) disposed on the same side of the first heat sink (100) and in contact with the first heat sink (100), is doped with a first doping type, and
- a second region (12) of the waveguide (10) disposed on the same side of the second heat sink (100) and in contact with the second heat sink (100), is doped with a second doping type different from the first doping type.

9. The photonic device (1) according to claim 8, wherein the first region (11) and the second region (12) of the waveguide (10) are directly in contact, forming a p-n junction in the central portion (10c) of the waveguide (10).

10. The photonic device (1) according to claim 8, wherein the first region (11) and the second region (12) are separated by a non-doped region (13) of the waveguide, forming a p-i-n junction in the central portion (10c) of the waveguide (10).

11. The photonic device (1) according to any one of claims 8 to 10, wherein a doping concentration of the first region (11) is higher in a portion in contact with the at least one via (110) than in the remaining part of the first region (11), and a doping concentration of the second region (12) is higher in a portion in contact with the at least one via (110) than in the remaining part of the second region (12).

12. The photonic device (1) according to any one of the preceding claims, wherein the PCM patch (20) is in direct contact with the waveguide (10).

13. The photonic device (1) according to any one of claims 1 to 11, wherein a layer (30) based on a dielectric material separates the PCM patch (20) from the waveguide (10).

14. The photonic device (1) according to any one of the preceding claims, further comprising a heater (40) disposed above the PCM patch (20), said heater (40) being configured to heat the PCM patch (20) when the heater (40) is activated.

15. The photonic device (1) according to any one of the preceding claims, further comprising a cladding layer (50) based on a dielectric material, preferably based on silicon dioxide or silicon nitride, in which the waveguide (10) is embedded.

16. The photonic device (1) according to claim 15 in combination with claim 2, wherein the cladding layer (50) is based on silicon nitride.

17. A photonic system (2) comprising at least one photonic device (1) according to any one of the preceding claims.
